# EUROPÄISCHE PATENTANMELDUNG

(11) **EP 3 494 786 A1**
(43) Veröffentlichungstag der Anmeldung: **12.06.2019**
(21) Anmeldenummer: 17205893.5
(22) Anmeldetag: 07.12.2017
(51) Int. Cl.: A01M 1/02, A01M 1/22, A01M 1/10, A01M 1/20

(54) **ERKENNUNG VON SCHÄDLINGEN**

(71) Anmelder: Bayer CropScience Aktiengesellschaft, 40789 Monheim am Rhein (DE)
(72) Erfinder: Die Erfindernennung liegt noch nicht vor
(74) Vertreter: BIP Patents

(57) **Zusammenfassung**

Die vorliegende Erfindung betrifft die Erkennung von Schädlingen im Eingangsbereich eines Bienenstocks. Gegenstände der vorliegenden Erfindung sind eine Vorrichtung, ein System und ein Verfahren zur Erkennung von Schädlingen, insbesondere des Kleinen Beutenkäfers.

## Beschreibung

Die vorliegende Erfindung betrifft die Erkennung von Schädlingen im Eingangsbereich eines Bienenstocks. Gegenstände der vorliegenden Erfindung sind eine Vorrichtung, ein System und ein Verfahren zur Erkennung von Schädlingen, insbesondere des Kleinen Beutenkäfers.

Bienen zählen weltweit zu den wichtigsten Bestäubern. Sie tragen in erheblichem Maße zur Erhaltung von Wild- und Kulturpflanzen und deren Erträgen bei; ihre ökologische Bedeutung ist beträchtlich.

Daher ist es wichtig, Bienen vor Schädlingen wie beispielsweise der Asiatischen Hornisse und dem Kleinen Beutenkäfer zu schützen.

Die Asiatische Hornisse (*Vespa velutina nigrithorax*) ist bis zu fünfmal größer als die Westliche Honigbiene und macht aggressiv Jagd auf Honigbienen.

Der Kleine Beutenkäfer (*Aethina tumida*) ist ein Parasit aus der Familie der Glanzkäfer. Der Käfer vermehrt sich sehr stark in Bienenvölkern. Die sich aus den Eiern entwickelnden Larven fressen Honig, Pollen und Brut und zerstören dabei die Waben. Seit etwa 1940 ist der Kleine Beutenkäfer im südlichen Afrika als Bienenparasit bekannt. 1996 tauchte er zum ersten Mal im südöstlichen Nordamerika auf und verbreitete sich von dort mit rasender Geschwindigkeit über die USA. Im Gegensatz zu den afrikanischen Bienenrassen, die sich gegen den Parasiten effizient zur Wehr setzen können, sind die nordamerikanischen Rassen der Westlichen Honigbiene dazu nicht in der Lage. 2004 wurde der Beutenkäfer erstmals auf europäischem Festland, in Portugal, festgestellt. Der Kleine Beutenkäfer gehört zu den gefürchtetsten Bienenparasiten, da bei Massenbefall ein ganzes Volk innerhalb kürzester Zeit vernichtet werden kann. Die momentan zur Verfügung stehenden chemischen Bekämpfungsmaßnahmen bergen das Risiko von Resistenzbildungen, Kontaminationen der Bienenprodukte und Effekte auf die Bienen selbst.

Gesucht wird daher nach Möglichkeiten, Bienenschädlinge wie die Asiatische Hornisse und den Kleinen Beutenkäfer zu bekämpfen, ohne dabei die Bienen und den von den Bienen produzierten Honig übermäßig zu beeinträchtigen. Insbesondere gilt es, einer Resistenzbildung vorzubeugen; es sollten demnach nur Maßnahmen ergriffen werden, wenn ein Bienenstock befallen ist oder ein Befall tatsächlich droht.

Dies wird durch die vorliegende Erfindung erreicht.

Ein erster Gegenstand der vorliegenden Erfindung ist eine Vorrichtung umfassend
- eine Einrichtung zur Aussendung von elektromagnetischer Strahlung im Eingangsbereich eines Bienenstocks,
- eine Sensoreinheit, welche zumindest einen Teil der elektromagnetischen Strahlung detektiert, die von einem Objekt, das sich auf einer Plattform im Eingangsbereich befindet, zurückgeworfen wird,
- eine Auswerteeinheit, die so konfiguriert ist, dass sie die von dem Objekt zurückgeworfene und von der Sensoreinheit detektierte elektromagnetische Strahlung analysiert und das Objekt als Biene oder als Bienenschädling identifiziert,
- einen Signalgeber, und
- eine Steuereinheit, die so konfiguriert ist, dass sie den Signalgeber veranlasst, ein Signal zu geben, wenn die Auswerteinheit ein Objekt als Bienenschädling identifiziert hat.

Ein weiterer Gegenstand der vorliegenden Erfindung ist Verfahren umfassend die Schritte
- Bestrahlen eines Eingangsbereich eines Bienenstocks mit elektromagnetischer Strahlung,
- Auffangen zumindest eines Teils der elektromagnetischen Strahlung, die von einem Objekt auf einer Plattform im Eingangsbereich beim Bestrahlen zurückgeworfen wird,
- Analysieren der vom Objekt zurückgeworfenen elektromagnetischen Strahlung,
- Zuordnung des Objekts zu einem Bienenschädling,
- Abgeben eines Signals.

Ein weiterer Gegenstand der vorliegenden Erfindung ist die Verwendung der erfindungsgemäßen Vorrichtung im Eingangsbereich eines Bienenstocks.

Ein weiterer Gegenstand der vorliegenden Erfindung ist ein System umfassend
- eine erfindungsgemäße Vorrichtung,
- Mittel zur Bekämpfung des Bienenschädlings.

Die Erfindung wird nachstehend näher erläutert, ohne zwischen den Erfindungsgegenständen (Verfahren, Vorrichtung, Verwendung, System) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, Verwendung, System) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen des erfindungsgemäßen Verfahrens dar.

Die erfindungsgemäße Vorrichtung überwacht den Eingangsbereich eines Bienenstocks. Vor dem Eingang in den Bienenstock befindet sich üblicherweise eine Plattform, auf der ankommende Bienen landen und abfliegende Bienen starten. Die erfindungsgemäße Vorrichtung ist so konfiguriert, dass sie diese Plattform und insbesondere den Bereich der Plattform unmittelbar vor dem Eingang überwacht, um einen Bienenschädling, der sich auf den Eingang zubewegt und/oder durch den Eingang in den Bienenstock bewegt, zu erkennen.

Vorzugsweise handelt es sich bei dem Bienenschädling um die Asiatische Hornisse oder den Kleinen Beutenkäfer, ganz bevorzugt um den Kleinen Beutenkäfer.

Üblicherweise halten sich nur Bienen auf dieser Plattform auf. Ein Bienenschädling, insbesondere der Kleine Beutenkäfer und die Asiatische Hornisse, unterscheidet sich optisch von einer Biene. Die erfindungsgemäße Vorrichtung ist so konfiguriert, dass sie anhand optischer Merkmale entscheidet, ob es sich bei einem Objekt im Eingangsbereich eines Bienenstocks um eine Biene oder um einen Bienenschädling handelt.

Der Kleine Beutenkäfer und die Asiatische Hornisse unterscheiden sich beispielsweise in Größe, Form und Farbe von einer Biene. Diese optischen Merkmale können zu einer Erkennung des Bienenschädlings eingesetzt werden.

Für die optische Erkennung von Merkmalen, die einen Bienenschädling von einer Biene unterscheiden, gibt es verschiedene technische Lösungen. Den hier beschriebenen Lösungen ist gemeinsam, dass elektromagnetische Strahlung mittels einer oder mehrerer Quellen für die elektromagnetische Strahlung ggf. unter Hinzunahme von optischen Komponenten wie beispielsweise Linsen, Prismen, Strahlteilern, Spiegeln und dergleichen auf das zu erkennende Objekt auf der Plattform im Eingangsbereich eines Bienenstocks gelenkt wird. Es kommt zu einer Wechselwirkung zwischen der elektromagnetischen Strahlung und dem Objekt und es wird elektromagnetische Strahlung vom Objekt zurück in den Raum geworfen. Die Wechselwirkung zwischen Strahlung und Objekt hängt spezifisch von dem Objekt ab, so dass die zurückgeworfene Strahlung spezifisch für das jeweilige Objekt ist. Die zurückgeworfene Strahlung enthält also Informationen zum Objekt. Zumindest ein Teil der vom Objekt zurückgeworfenen elektromagnetischen Strahlung wird mittels eines oder mehrerer Sensoren aufgefangen. Die aufgefangene Strahlung wird analysiert und es werden Merkmale extrahiert, die auf das jeweilige Objekt hinweisen. Anhand der Merkmale erfolgt die Identifizierung des Objekts.

Unterscheidet sich ein Bienenschädling farblich von einer Biene, so können Änderungen im Spektrum der zurückgeworfenen elektromagnetischen Strahlung verwendet werden, um den Bienenschädling zu identifizieren. In einem solchen Fall wird elektromagnetische Strahlung mit unterschiedlichen Wellenlängen verwendet. Einige Wellenlängen werden von dem Objekt stärker absorbiert als andere. Die Intensitätenverteilung der Wellenlängen der zurückgeworfenen elektromagnetischen Strahlung unterscheidet sich damit von der Intensitätenverteilung der Wellenlängen der auf das Objekt treffenden elektromagnetischen Strahlung und ist für das jeweilige Objekt charakteristisch.

Unterscheidet sich ein Bienenschädling in der Größe von einer Biene, so können beispielsweise Lichtgitter oder Lichtvorhänge verwendet werden, um den Bienenschädling zu identifizieren. Denkbar ist zum Beispiel die Verwendung einer Mehrzahl von Sendern, die zum Beispiel parallel verlaufende Lichtstrahlen in Richtung einer Mehrzahl an Empfängern aussenden. Bewegt sich ein Objekt durch einen Lichtstrahl, wird dieser unterbrochen, was vom Empfänger registriert wird. Verlaufen mehrere Lichtstrahlen nebeneinander, werden mehr Lichtstrahlen durch ein größeres Objekt unterbrochen als durch ein kleineres. Die Anzahl der unterbrochenen Lichtstrahlen korreliert damit mit der Objektgröße und kann zur Identifizierung des Bienenschädlings verwendet werden. Anstelle einer Vielzahl von Sendern und Empfängern kann auch ein Sender verwendet werden, der einen Bereich auf der Plattform im Eingangsbereich des Bienenstocks abtastet (Scanner). Die Abtastung kann beispielsweise durch bewegliche Spiegel erfolgen. Lichtvorhänge sind beispielweise beschrieben in DE6913561U, DE2343096A1, DE2265258A1, DE2920804A1, DE2934554A1, US2003218122A, DE20304211U1, DE10227710B4, EP2172791A1 und US2011204211A und in vielfältiger Form kommerziell verfügbar.

Denkbar ist auch die Verwendung von optischen Abstandssensoren. Ein oder mehrere Sender senden kurze Lichtimpulse auf das Objekt, die von dem Objekt zurückgeworfen werden. Die zurückgeworfenen Lichtimpulse werden beispielsweise mit Hilfe von optischen Komponenten auf einen Empfänger, zum Beispiel einen optoelektrischen Chip geleitet. Je nach Größe des Objekts vergeht mehr oder weniger Zeit, bis die zurückgeworfenen Lichtimpulse am Empfänger ankommen. Dies kann zur Größenbestimmung des Objektsverwendet werden. Solche Abstandssensoren sind beispielsweise beschrieben in DE19757595A1, EP1442319B1, DE19634269A1, EP1118881A2 und US2011273723A und in vielfältiger Form kommerziell verfügbar.

Denkbar ist auch die Identifizierung eines Bienenschädlings anhand mehrerer Merkmale (Größe, Form und/oder Farbe). Es ist zum Beispiel denkbar, eine Kamera oberhalb der Plattform im Eingangsbereich eines Bienenstocks zu positionieren und digitale Bildaufnahmen zu erzeugen. Die Bildaufnahmen werden dann einer Auswerteeinheit zugeführt, die in den Bildern nach Merkmalen eines Bienenschädlings sucht. Die Bildaufnahmen können in definierten Zeitabständen (z.B. ein Bild pro Sekunde) aufgenommen werden. Denkbar ist auch, dass eine Bildaufnahme durch ein Ereignis getriggert wird, beispielsweise durch ein sich auf der Plattform bewegendes Objekt. Die Objekterkennung kann auf Basis von Verfahren der Mustererkennung und/oder selbstlernenden Systemen (z.B. künstliche neuronale Netze) erfolgen. Kamerasysteme zur Objekterkennung sind beispielsweise beschrieben in WO15123647A1, US2015049919A, US2013011011A und CN102760228A und kommerziell verfügbar.

Ist anhand eines oder mehrerer Unterscheidungsmerkmale ein Objekt auf der Plattform als Bienenschädling identifiziert, veranlasst die Steuereinheit einen Signalgeber, ein Signal zu geben. Bei dem Signalgeber kann es sich beispielsweise um eine Sendeeinheit für Informationen handeln, die eine Mitteilung an ein externes Computersystem übermittelt, dass ein Bienenschädling auf der Plattform beobachtet worden ist. Bei dem Signalgeber kann es sich auch um einen Aktivator handeln, der ein Bekämpfungsmittel zur Bekämpfung des Bienenschädlings aktiviert. Ein solcher Aktivator kann beispielsweise ein Schalter sein, der ein elektrisch betriebenes Bekämpfungsmittel einschaltet.

Vorzugsweise wird die erfindungsgemäße Vorrichtung zur Erkennung eines Bienenschädlings mit einer Vorrichtung zur Bekämpfung des Bienenschädlings kombiniert. In einem solchen erfindungsgemäßen System führt eine Erkennung eines Bienenschädlings durch die Bienenschädlingserkennungsvorrichtung dazu, dass die Bienenschädlingsbekämpfungsvorrichtung aktiviert wird. Aktivierung kann bedeuten, dass die Bienenschädlingsbekämpfungsvorrichtung zuvor ausgeschaltet war und dann eingeschaltet wird, so dass sie ihre Funktion ausführen kann.

In einer bevorzugten Ausführungsform handelt es sich bei der Bienenschädlingsbekämpfungsvorrichtung um eine Vorrichtung zur Applikation eines Bekämpfungsmittels. Das Bekämpfungsmittel enthält einen Wirkstoff auf chemischer und/oder biologischer Basis, das eine Ausbreitung und/oder Vermehrung des Bienenschädlings verhindert. Die Applikationsvorrichtung startet bei Erkennen eines Bienenschädlings die Applikation des Bekämpfungsmittels in dem Bienenstock. Denkbar ist auch, dass die Applikation des Bekämpfungsmittels auf der Plattform erfolgt, auf der der Bienenschädling identifiziert worden ist.

In einer weiteren bevorzugten Ausführungsform wird der erkannte Bienenschädling unmittelbar nach Erkennung auf der Plattform unschädlich gemacht, beispielsweise durch thermische und/oder elektrische Energie, beispielsweise durch Beschuss mit einem Laserstrahl, durch Abflammen, mechanisch durch Zerquetschen, durch Vereisen zum Beispiel mit einem Kältespray oder einer anderen Methode.

In einer weiteren bevorzugten Ausführungsform befindet sich in dem Bienenstock eine Bienenschädlingsbekämpfungsvorrichtung, die einen Behälter mit einem Innenraum und mindestens einer Öffnung, durch die ein Bienenschädling in den Innenraum des Behälters gelangen kann, umfasst, wobei die mindestens eine Öffnung so dimensioniert ist, dass keine Biene aus dem Bienenstock in den Innenraum des Behälters gelangt. In dem Innenraum sind zwei Elektroden eingebracht, zwischen denen eine elektrische Spannung angelegt werden kann. Die Elektroden weisen einen Abstand voneinander auf, der etwas größer als die Höhe des Bienenschädlings ist, so dass der Bienenschädling problemlos zwischen die Elektroden gelangen kann. Vorzugsweise weisen die Elektroden einen Abstand von 3 mm bis 1 cm, vorzugsweise von 3,1 mm bis 6 mm, noch mehr bevorzugt 3,1 mm bis 5 mm zueinander auf. Vorzugsweise ist eine erste Elektrode auf dem Boden des Behälters angebracht und eine zweite Elektrode in einem über die Elektrodenfläche konstanten Abstand oberhalb der ersten Elektrode angebracht. Vorzugsweise erstreckt sich die erste Elektrode über den gesamten Boden des Behälters; vorzugsweise erstreckt sich die zweite Elektrode über die gesamte Fläche der ersten Elektrode (in konstantem Abstand oberhalb der ersten Elektrode). Als erste Elektrode wird vorzugsweise eine Metallplatte, vorzugsweise aus Kupfer verwendet. Als zweite Elektrode wird vorzugsweise ein Drahtgitter, vorzugsweise aus Kupfer verwendet. Die Maschenweite ist vorzugsweise kleiner als die Länge des Bienenschädlings. Vorzugsweise ist die Maschenweite kleiner als 5 mm. Die Elektroden sind mit einer Spannungsquelle verbunden, die sich in dem Behälter oder außerhalb des Behälters befinden kann. Vorzugsweise weist der Behälter neben dem Innenraum zur Aufnahme der Elektroden noch einen zweiten Innenraum zur Aufnahme der Spannungsquelle auf. Befindet sich in dem Zwischenraum zwischen der ersten Elektrode und der zweiten Elektrode ein Bienenschädling, so führt dies dazu, dass bei genügend hoher Spannung zwischen der ersten und der zweiten Elektrode ein elektrischer Funke (Stromschlag) von einer Elektrode zur anderen Elektrode überspringt, der den Bienenschädling erfasst und unschädlich macht. Vorzugsweise ist eine Steuereinheit vorhanden, die die Spannungsquelle dazu veranlasst, eine Spannung zwischen den Elektroden anzulegen. Vorzugsweise befindet sich die Steuereinheit zusammen mit der Spannungsquelle in dem zweiten Innenraum des Behälters. Vorzugsweise ist die Bienenschädlingsbekämpfungsvorrichtung mit der erfindungsgemäßen Vorrichtung zur Erkennung des Bienenschädlings in der Weise verbunden, dass die Bienenschädlingsbekämpfungsvorrichtung dann aktiviert wird, wenn von der Bienenschädlingserkennungsvorrichtung ein Bienenschädling auf der Plattform im Eingangsbereich des Bienenstocks erkannt worden ist.

Die Erfindung wird nachstehend anhand von Beispielen näher erläutert, ohne die Erfindung auf die in den Beispielen gezeigten Merkmale und Merkmalskombinationen beschränken zu wollen.

Es zeigt:

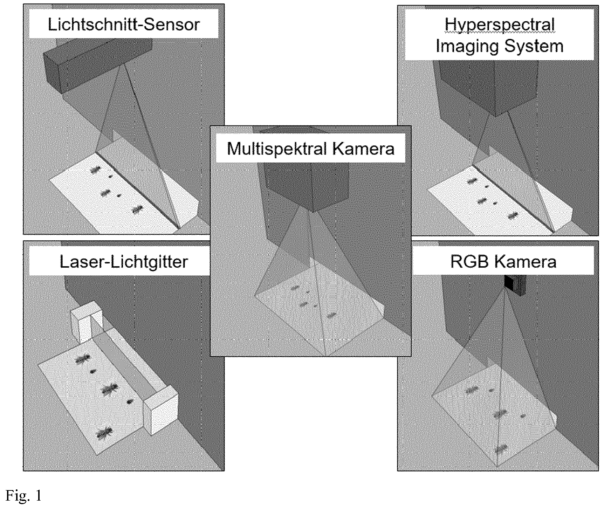

Fig. 1 zeigt fünf Beispiele für die optische Differenzierung von Bienen und Bienenschädlingen. Zu erkennen ist jeweils ein Sensorsystem, das an einem Bienenstock oberhalb der Plattform, auf der Bienen landen und von der Bienen starten, angebracht sind und elektromagnetische Strahlung in Richtung der Plattform senden. Von der Plattform gelangen Bienen (und auch Bienenschädlinge) in den Bienenstock. Die von der Plattform zurückgesandte elektromagnetische Strahlung oder zumindest ein Teil davon wird von dem Sensorsystem erfasst und ausgewertet.

## Patentansprüche

1. Vorrichtung umfassend
- eine Einrichtung zur Aussendung von elektromagnetischer Strahlung im Eingangsbereich eines Bienenstocks,
- eine Sensoreinheit, welche zumindest einen Teil der elektromagnetischen Strahlung detektiert, die von einem Objekt, das sich auf einer Plattform im Eingangsbereich befindet, zurückgeworfen wird,
- eine Auswerteeinheit, die so konfiguriert ist, dass sie die von dem Objekt zurückgeworfene und von der Sensoreinheit detektierte elektromagnetische Strahlung analysiert und das Objekt als Biene oder als Bienenschädling identifiziert,
- einen Signalgeber, und
- eine Steuereinheit, die so konfiguriert ist, dass sie den Signalgeber veranlasst, ein Signal zu geben, wenn die Auswerteinheit ein Objekt als Bienenschädling identifiziert hat.

2. Vorrichtung gemäß Anspruch 1, umfassend
- eine Mehrzahl Sendern, die parallel verlaufende Lichtstrahlen in Richtung einer Mehrzahl von Empfängern aussenden,
- die Mehrzahl der Empfänger, wobei jeder Empfänger so konfiguriert ist, dass er eine Unterbrechung eines Lichtstrahls durch das Objekt auf der Plattform detektiert,
- die Auswerteeinheit, die so konfiguriert ist, dass sie aus der Zahl der durch das Objekt unterbrochenen Lichtstrahlen Informationen über die Größe und/oder Form des Objekts gewinnt und anhand dieser Informationen das Objekt als Biene oder als Bienenschädling identifiziert.

3. Vorrichtung gemäß Anspruch 1, umfassend
- einen oder mehrere Sender, die Lichtimpulse in Richtung der Plattform aussenden,
- einen oder mehrere Empfänger, die Lichtimpulse detektieren, die von dem Objekt auf der Plattform zurückgeworfen werden,
- die Auswerteeinheit, die so konfiguriert ist, dass sie aus der Zeitspanne zwischen dem Aussenden eines oder mehrerer Lichtimpulse und dem Detektieren des zurückgeworfenen Lichtimpulses oder der zurückgeworfenen Lichtimpulse Informationen über die Form und/oder Größe des Objekts gewinnt und anhand dieser Informationen das Objekt als Biene oder als Bienenschädling identifiziert.

4. Vorrichtung gemäß Anspruch 1, umfassend
- eine Beleuchtungseinheit, die die Plattform beleuchtet,
- eine Kameraeinheit, die mindestens eine digitale Bildaufnahme von dem Objekt auf der Plattform erzeugt,
- die Auswerteeinheit, die so konfiguriert ist, dass sie die mindestens eine digitale Bildaufnahme analysiert und Merkmale des Objekts in der Bildaufnahme identifiziert und das Objekt anhand der Merkmale als Bienenschädling oder als Biene identifiziert.

5. Vorrichtung gemäß einem der Ansprüche 1 bis 4, wobei es sich bei dem zu identifizierenden Bienenschädling um den Kleinen Beutenkäfer handelt.

6. System umfassend
- eine Vorrichtung gemäß einem der Ansprüche 1 bis 5, und
- Mittel zur Bekämpfung des Bienenschädlings.

7. System gemäß Anspruch 6, wobei die Vorrichtung und die Mittel miteinander in der Weise verbunden sind, dass die Vorrichtung bei einer Identifizierung eines Bienenschädlings die Mittel zur Bekämpfung des Bienenschädlings aktiviert.

8. System gemäß einem der Ansprüche 6 oder 7, wobei es sich bei den Mitteln zur Bekämpfung des Bienenschädlings um Mittel handelt, die den Bienenschädling auf der Plattform mit Hilfe thermischer, elektrischer und/oder mechanischer Energie unschädlich machen.

9. System gemäß einem der Ansprüche 6 oder 7, wobei es sich bei den Mitteln zur Bekämpfung des Bienenschädlings um einen Applikator handelt, der einen oder mehrere chemische und/oder biologische Wirkstoffe appliziert.

10. System gemäß einem der Ansprüche 6 oder 7, wobei es sich bei den Mitteln zur Bekämpfung des Bienenschädlings um eine Vorrichtung handelt, die
- einen Behälter mit einem Innenraum und mindestens einer Öffnung, durch die ein Bienenschädling in den Innenraum des Behälters gelangen kann, und
- ein Bekämpfungsmittel, das den Bienenschädling, der durch die mindestens eine Öffnung in den Innenraum des Behälters gelangt ist, unschädlich macht,
umfasst,
**dadurch gekennzeichnet, dass** die mindestens eine Öffnung so dimensioniert ist, dass keine Biene aus dem Bienenstock in den Innenraum des Behälters gelangt.

11. Verfahren umfassend die Schritte
- Bestrahlen eines Eingangsbereich eines Bienenstocks mit elektromagnetischer Strahlung,
- Auffangen zumindest eines Teils der elektromagnetischen Strahlung, die von einem Objekt auf einer Plattform im Eingangsbereich beim Bestrahlen zurückgeworfen wird,
- Analysieren der vom Objekt zurückgeworfenen elektromagnetischen Strahlung,
- Zuordnung des Objekts zu einem Bienenschädling,
- Abgeben eines Signals.

12. Verfahren gemäß Anspruch 11, umfassend die Schritte
- Aussenden einer Mehrzahl an parallel verlaufenden Lichtstrahlen in Richtung einer Mehrzahl von Empfängern,
- Detektieren einer Unterbrechung eines oder mehrerer Lichtstrahlen durch das Objekt auf der Plattform,
- Ermitteln der Zahl der durch das Objekt unterbrochenen Lichtstrahlen
- Korrelieren der Zahl der durch das Objekt unterbrochenen Lichtstrahlen mit der Größe und/oder Form des Objekts
- Identifizieren des Objekts als Biene oder als Bienenschädling anhand der Größe und/oder Form.

13. Verfahren gemäß Anspruch 11, umfassend die Schritte
- Aussenden eines oder mehrerer Lichtimpulse in Richtung der Plattform,
- Detektieren eines oder mehrerer Lichtimpulse, die von dem Objekt auf der Plattform zurückgeworfen werden,
- Ermitteln der Zeitspanne(n) zwischen dem Aussenden des einen oder der mehreren Lichtimpulse und der Detektion des einen oder der mehreren zurückgeworfenen Lichtimpulse,
- Korrelieren der Zeitspanne(n) mit der Form und/oder der Größe des Objekts,
- Identifizieren des Objekts als Biene oder als Bienenschädling anhand der Form und/oder der Größe.

14. Verfahren gemäß Anspruch 11, umfassend die Schritte
- Beleuchten der Plattform,
- Erzeugen mindestens einer digitalen Bildaufnahme von dem Objekt auf der Plattform,
- Analysieren der mindestens einen digitalen Bildaufnahme und Identifizieren von Merkmalen des Objekts in der digitalen Bildaufnahme,
- Identifizieren des Objekts als Bienenschädling oder als Biene anhand der Merkmale.

15. Verwendung einer Vorrichtung gemäß einem der Ansprüche 1 bis 5 im Eingangsbereich eines Bienenstocks, vorzugsweise zur Erkennung eines Kleinen Beutenkäfers.
